# NEUE EUROPÄISCHE PATENTSCHRIFT

(11) **EP 0 886 671 B2**
(45) Veröffentlichungstag und Bekanntmachung des Hinweises auf die Entscheidung über den Einspruch: **01.07.2009**
(45) Hinweis auf die Patenterteilung: 14.03.2001
(21) Anmeldenummer: 97951857.8
(22) Anmeldetag: 16.12.1997
(51) Int. Cl.: C09D 11/02

(54) **MIGRATIONS-, GERUCHS- UND SWELLINGARME BOGENOFFSETDRUCKFARBE**
LOW-STAINING, LOW-ODOR AND LOW-SWELLING SHEET OFFSET PRINTING INK
ENCRE OFFSET POUR IMPRIMER DES FEUILLES A FAIBLE TAUX DE MIGRATION ET DE GONFLEMENT ET A ODEUR PEU PRONONCEE

(30) Priorität: 21.12.1996 DE 19653828
(43) Veröffentlichungstag der Anmeldung: 30.12.1998
(73) Patentinhaber: MICHAEL HUBER MÜNCHEN GMBH, 85551 Kirchheim (DE)
(72) Erfinder: BORGMANN, Ursula, D-85567 Grafing (DE); FUSS, Thomas, D-85614 Kirchseeon (DE); HANKE, Klaus, D-85551 Kirchheim (DE)
(74) Vertreter: Motsch, Andreas
(86) Internationale Anmeldenummer: PCT/DE1997/002956
(87) Internationale Veröffentlichungsnummer: WO 1998/028373

(56) Entgegenhaltungen:
- WO-A1-97/35934
- DE-A1- 19 516 028
- JP-A- 08 218 022
- JP-A- 60 011 565
- US-A- 3 881 942
- US-A- 5 178 672
- US-A- 5 599 974
- SAKATA INKS: "PRINTING INK FOR METAL USED FOR TIN CANS" WORLD SURFACE COATINGS ABSTRACTS., Bd. 63, Nr. 571, Januar 1990, OXFORD GB, Seite 77 XP000106320
- 'Beispielhafte Kooperation' POLYGRAPH, TREFFPUNKT DRUCKINDUSTRIE November 1995, Seiten 39 - 47
- 'RÖMPP Lacke und Druckfarben', 1998, GEORG THIEME VERLAG, STUTTGART, ISBN 3137760011 Seiten 459 - 460
- SunChemical Locations in Europe, http://www.suneurope.com/locations/germany. htm
- 'RÖMPP Chemie Lexikon', 1991 Seiten 2822 - 2824
- L. PAULING: 'Die Natur der chemischen Bindung', 1962, VERLAG CHEMIE GMBH, WEINHEIM Seiten 112,210 - 211
- 'RÖMPP, Lacke und Druckfarben', 1998, GEORG THIEME VERLAG, STUTTGART, ISBN 3137760011 Seiten 521 - 522
- 'Handbook of Chemistry a. Physics', Bd. 59, CRC PRESS Artikel 'Definition of Molecular Volume', Seiten 1978 - 1979
- 'RÖMPP Lacke und Druckfarben', 1998, GEORG THIEME VERLAG, STUTTGART, ISBN 3137760011 Seite 507
- H.G.MACK, H. OBERHAMMER: 'Advances in Mole. Structure Res.', Bd. 3, 1997, JAI PRESS INC., ISBN 0762302089 Seiten 83 - 84

## Beschreibung

Die Erfindung betrifft eine migrations-, geruchs- und swellingarme Bogenoffsetdruckfarbe, die zur Herstellung von Lebensmittelverpackungen geeignet ist.

Im Stand der Technik sind einerseits Bogenoffsetdruckfarben bekannt, die als geruchs- und geschmacksarm bezeichnet werden können. Diese Farben enthalten als Bindemittel geruchsarme Komponenten, wie Hartharze, hydrierte Mineralölschnitte, synthetische aromatische Öle, Alkydharze, insbesondere solche mit niedriger Jodzahl von ≤ 30 g J₂/100 g, und Dialkylether, wie beispielsweise Di-n-dodecylether, Di-n-undecylether, Allyl-n-octylether, n-Hexyl-n-undecylether.

Bei diesen Farben kann es jedoch zu Stoffübergängen auf das Füllgut kommen, wobei die Stoffübergänge gemäß dem Diffusionsgesetz abschätzbar sind. Das deutsche Lebensmittelrecht verbietet jedoch jeden Stoffübergang, ausgenommen gesundheitlich, geruchlich und geschmacklich unbedenkliche Anteile, die technisch unvermeidbar sind. Bei den Farben des Standes der Technik kann es jedoch zu einer Migration der flüssigen Inhaltsstoffe kommen, was ferner den störenden Aspekt des sogenannten Swellings hervorrufen kann. Durch die Migration kann es insbesondere bei dünnen Verpackungsfolien, d.h. bei Folien unter 30 µm zu Verwerfungen der Folie in Form von Faltenbildung und Wellen kommen. Diese Verwerfungen sind irreversibel und optisch und technisch nicht akzeptabel.

Im Stand der Technik sind ferner sogenannte Antiswellingfarben bekannt, die einen mineralölfreien Bindemittelaufbau besitzen. Der gravierende Nachteil dieser Farben besteht jedoch darin, daß die niedrigviskosen Bindemittelbestandteile erhebliche Migrationspotentiale aufweisen können. In Primärverpackungen sind daher stoffliche Übergänge möglich, die den Geruch und Geschmack des Füllguts, insbesondere des Lebensmittels, nachteilig verändern können. Solche Übergänge werden beispielsweise gemäß der Schweizer Gesetzgebung als Verunreinigungen behandelt ("Verordnung über Fremd- und Inhaltsstoffe in Lebensmitteln" - Fremd- und Inhaltsstoffeverordnung, FIV - vom 26.06.1996). Auch nach dem deutschen Lebensmittelgesetz gilt für Lebens- und Genußmittelverpackungen, daß geruchliche und geschmackliche Veränderungen des Füllguts durch die Verpackung zu vermeiden sind (§31 LMBG, Abs. 1).

Die Aufgabe der Erfindung bestand daher darin, Bogenoffsetdruckfarben bereitzustellen, die sowohl migrations- und geruchsarm als auch swellingarm sind und die daher keine störenden geruchlichen und geschmacklichen Veränderungen des Verpackungsgutes verursachen bzw. die gesetzlich vorgegebenen Migrationswerte einhalten.

Geruchliche und geschmackliche Veränderungen des Verpackungsgutes durch Druckfarben werden nach DIN 10955, Prüfung von Packstoffen und Packmitteln für Lebensmittel, geprüft. Hierbei müssen die Werte kleiner 2 sein, um den genannten Anforderungen zu entsprechen.

Die Aufgabe der Erfindung wird durch eine Offsetdruckfarbe gelöst, die ein kolophoniummodifiziertes Phenolharz (A) und/oder ein Maleinatharz (B) und/oder ein modifiziertes Kohlenwasserstoffharz (C) und/oder einen Kolophoniumharzester (D) umfaßt, die dadurch gekennzeichnet ist, daß sie als Lösungsmittel für das/die Harz(e) einen oder mehrere wasserunlösliche(n) Fettsäureester (E) von mehrwertigen Alkoholen mit hohem sterischen Raumbedarf und/oder von Ethinolen aufweist, wobei die Ester sterische Abmessungen des Durchmessers lₘₐₓ von 2,0 bis 7,0 nm und des Volumens Vₘᵢₜₜₑₗ von 1,0 bis 21,0 nm³ aufweisen.

Unter Raumbedarf ist die dreidimensionale sterische Abmessung von Molekülen zu verstehen. Die angegebenen Werte beziehen sich auf maximal gestreckt vorliegende Moleküle.

In einer bevorzugten Ausführungsform weist die erfindungsgemäße Offsetdruckfarbe ferner mehrfunktionelle Allylester mehrwertiger organischer Säuren auf. Diese Allylester sind zur oxidativen Trocknung befähigt und entwickeln bei der Trocknung keine Spaltprodukte, die zu sensorischen Beeinträchtigungen der verpackten Lebensmittel führen. Bei der oxidativen Trocknung kommt es zu einer Vernetzung und damit zu einem stabilen Druckfarbenfilm. Dieser Vorgang der oxidativen Vernetzung der verdruckten Farbe wird durch die darin enthaltenen Salze organischer Säuren von Kobalt und/oder Mangan in Konzentrationen von 0,05-0,2% herbeigeführt.

Bevorzugt sind Allylester mehrwertiger organischer Säuren mit einer Säurezahl von 2-20 mg KOH/g (DIN 55 936), einer Jodzahl von 50 - 120 g J₂/100 g (DIN 55 936) und einer Viskosität von 0,5 - 300 Pa·s, gemessen bei 20°C und 50 l/s sowie einem Molekulargewicht M_{W} von 300-10000.

Weiterhin ist eine Offsetdruckfarbe bevorzugt, die zusätzlich einen Polyallylether aufweist. Seine Funktion entspricht im wesentlichen derjenigen der mehrfunktionellen Allylester.

Durch die Zugabe der mehrfunktionellen Allylester bzw. Polyallylether kann die anwendungstechnisch für Lebensmittel- und Genußmittelverpackungen geforderte mechanische Resistenz erreicht werden, die in einer Vielzahl der Fälle bisher erst durch Lackierung erreicht werden konnte, so daß diese entfallen kann.

Ferner ist eine erfindungsgemäße Offsetdruckfarbe bevorzugt, die mineralölfrei ist.

Diese Farben sind frei von Stoffen mit hohem Migrationspotential. Die in den Bindemitteln der Farben enthaltenen Harze und speziellen Fettsäureester mit ihrem hohen sterischen Raumbedarf und/oder die Fettsäureester von Ethinolen sind so aufeinander abgestimmt, daß der stoffliche Übergang auch im Falle von Primärverpackungen auf Lebensmittel derartig reduziert wird, daß die gesetzlich vorgeschriebenen Grenzwerte deutlich unterschritten werden. Zudem findet bei einem Direktkontakt zwischen der gedruckten Farbe und beispielweise einer Polypropylenverpackungsfolie durch die erfindungsgemäße Verhinderung eines stofflichen Übergangs nahezu keine Dimensionsveränderung statt. Diese wurde bisher durch eine Migration in die Kunststoffmatrix, was als Folien-Swelling bezeichnet wird, verursacht.

Mit den erfindungsgemäßen Farben ist es somit erstmals gelungen, die vorteilhaften Eigenschaften geruchsarm, migrationsarm und swellingarm gleichzeitig in Bogenoffsetdruckfarben zu erzielen. Diese Farben sind daher insbesondere für die Herstellung von Lebensmittelverpackungen unter Verwendung von beispielsweise Karton und Papier geeignet.

Darüber hinaus ist ein ganz wesentlicher Vorteil der erfindungsgemäßen Offsetdruckfarbe, daß sie auf der Basis nachwachsender Rohstoffe aufgebaut ist.

Ferner ist eine erfindungsgemäße Offsetdruckfarbe besonders bevorzugt, bei der die Fettsäuren der Fettsäureester eine Kohlenstofflänge von 6-26, insbesondere von 8-26, Kohlenstoffatomen aufweisen. Bei den Fettsäuren kann es sich um gesättigte oder ungesättigte Fettsäuren handeln. Beispielhaft seien die folgenden Fettsäuren genannt: Octadecensäure, Linolsäure, Linolensäure, Elaeostearinsäure, Tetradecansäure, Hexadecansäure, Octadecansäure, Aracinsäure, Dodecansäure, Hexansäure, Octansäure, Decansäure und Docosensäure. Diese Fettsäuren können vor ihrer Veresterung destillativ gereinigt werden.

Bevorzugt ist eine erfindungsgemäße Offsetdruckfarbe, bei der die mehrwertigen Alkohole aus Trimethylolpropan, Pentaerythrit, Dipentaerythrit, Sorbitol und 2-Butyl-2-ethyl-1,3-propandiol ausgewählt sind. Bevorzugt ist ferner eine erfindungsgemäße Offsetdruckfarbe, bei der die Fettsäureester der mehrwertigen Alkohole eine Säurezahl zwischen 5 und 20 mg KOH/g (DIN 53402), eine Jodzahl zwischen 0 und 150 g J₂/100 g (DIN 55936) und eine Viskosität zwischen 20 und 500 mPa·s (DIN 53229) aufweisen. Die mehrwertigen Alkohole sind mehrfach oder vollständig verestert.

Beispiele für erfindungsgemäß eingesetzte wasserunlösliche Fettsäureester sind Pantaerythrittetracaprat, Dipentaerythrithexacaprat, Pentaerythrittetradocoseat und Dipentaerythrithexadocoseat.

Der Einsatz natürlicher Pflanzenöle, d.h. der entsprechenden Triglyceride, kann die gestellte Aufgabe nicht lösen und erst durch die beschriebene erfindungsgemäße Offsetdruckfarbe konnte die Aufgabe überraschenderweise gelöst werden.

Bevorzugt ist ferner eine erfindungsgemäße Offsetdruckfarbe, die dadurch gekennzeichnet ist, daß die Harze ein Molekulargewicht M_{W} von 5000-120000, eine Säurezahl von 10-40, eine Hydroxylzahl von 20-70 und einen Schmelzbereich von 120-190°C aufweisen. Die Messung des Schmelzbereichs erfolgt hierbei nach der Kapillarmethode.

Die Harze sollen sich sensorisch neutral verhalten und in den genannten Fettsäureestern oder deren Mischungen ohne Co-Lösemittel lösen. Darüber hinaus sollen die Harze mit den genannten Fettsäureestern oder deren Mischungen verträglich sein. Die Verträglichkeit einer Harzlösung bzw. eines Bindemittels wird durch die Hexanzahl (HEZ) definiert. Die Verträglichkeit soll in einem HEZ-Bereich zwischen 0 und +20 liegen.

Als besonders gut geeignet und daher bevorzugt erwiesen sich Harze mit einer Viskosität von 10-90 Pa·s bei 40% in Mineralöl (Firma Haltermann PKW-F 6/9) bzw. mit einer Viskosität von 20-100 Pa·s bei 40% in Mineralöl (Firma Haltermann PKW-f 6/9 ar) jeweils gemessen bei 50 l/s und einer Temperatur von 20°C.

Als besonders geeignet erwiesen sich ferner Harze mit einem Trübungspunkt von 55-150°C bei 10% in Mineralöl (Firma Haltermann PKW-F 6/9 af neu) bzw. mit einem Trübungspunkt von 50-150°C bei 10% in Mineralöl (Firma Haltermann PKW-F 6/9).

Als vorteilhaft erwies sich eine Offsetdruckfarbe, bei der die Harze (A):(B) in einem Mengenverhältnis von 33-76:24-67 vorliegen sowie eine Offsetdruckfarbe, bei der die Harze (A):(B):(C) in einem Mengenverhältnis von 22-51:23-46:16-33 vorliegen.

Als besonders vorteilhaft und damit bevorzugt ist eine erfindungsgemäße Offsetdruckfarbe, bei der die Harze (A) und (B) sowie der Fettsäureester mehrwertiger Alkohole (E) in einem Mengenverhältnis von 17-36:13-32:45-70 vorliegt sowie eine erfindungsgemäße Offsetdruckfarbe, bei der die Harze (A), (B), (C) und (D) sowie der Fettsäureester (E) in einem Mengenverhältnis von (A):(B):(C):(D):(E) von 0-45:0-32:0-24:0-19:38-70 vorliegt.

Die Herstellung der erfindungsgemäßen Offsetdruckfarben erfolgt in an sich bekannter Weise.

Das Verhältnis von Viskosität zu Zügigkeit der Offsetdruckfarben sollte im Bereich von 50-120 Pa·s (50 l/s, 20°C) zu 8-14 (26°C; Meßgeschwindigkeit 200 U/min; 1,3 m³ Farbe) liegen, wobei die zügigkeit mittels Prüfbau-Inkomat der Firma Dürner gemessen wurde.

Die rheologischen Daten der Offsetdruckfarben werden auf die anwendungstechnischen Erfordernisse und Bedruckstoffe in an sich bekannter Weise eingestellt.

### Beispiele

Die in den folgenden Beispielen aufgeführten Offsetdruckfarben wurden wie folgt hergestellt:
(a) Fertigung des Bindemittels
   Die Festkörperkomponenten des Bindemittels wurden in der Lösungsmittelkomponente bzw. den Lösungsmittelkomponenten mit einer Konzentration von 50% bei 180-200°C unter Rühren und Begasung mit Inertgas gelöst.
(b) Fertigung der Offsetdruckfarbe
   Die Festkörperkomponenten wurden in 30%iger Konzentration am Dissolver vordispergiert. Nach Zugabe der Restbindemittelmenge wurde die Mischung über ein Dreiwalzwerk feindispergiert. Das gewünschte Viskositäts-/Zügigkeitsverhältnis der Farbe wird über die Konzentration an Fettsäureester eingestellt.

### Beispiel 1

Es wurde eine Offsetdruckfarbe gemäß folgender Rezeptur hergestellt:

| | | | |
|---|---|---|---|
| Lutetia Rubin BLDN 375® | Francolor Pigments | Pigment Red 57:1 | 18 % |
| Ceridust 3620® | Hoechst AG | PE-Wachs | 1 % |
| Reisstärkepuder Typ B | Almil Leonhardt GmbH | | 0,5 % |
| Alsynol RL 62® | Arizona Chemical | KP-Harz | 11,6 % |
| Alsynol RC 17® | Resisa | Maleinatharz | 8,1 % |
| Pentalyn 621® | Hercules | Kolophoniumester | 4,2 % |
| EW-Print 1041® | Henkel KG | Pentaerythrit-tetraoleat | 56.6 % |
| | | | 1̅0̅0̅ |

Unter einem KP-Harz versteht man ein kolophoniummodifiziertes Phenolharz.

### Vergleichsbeispiel

Es wurde eine Offsetdruckfarbe gemäß folgender Rezeptur hergestellt:

| | | | |
|---|---|---|---|
| Sico Echtgelb D 1361 DD® | BASF AG | Pigment Yellow 13 | 12 % |
| Sovermol KA 3174® | Henkel KG | Kokos-Alkydharz | 8 % |
| Magnesia 10 | Magnesia GmbH | Magnesiumcarbonat | 3 % |
| Ceridust 3620® | Hoechst AG | PE-Wachs | 1 % |
| Reisstärkepuder Typ B | Almil Leonhardt GmbH | | 0,5 % |
| Alsynol RL 58® | Arizona Chemical | KP-Harz | 11 % |
| Tergraf UZ-76® | Resisa | KP-Harz | 16;5 % |
| Mediaplast VP 2160® | Kettlitz Chemie GmbH | synthetisches, | 48.% |
| | | aromatisches Öl | |
| | | | 1̅0̅0̅ |

Die Verarbeitung der Offsetdruckfarben gemäß dem Beispiel 1 und dem Vergleichsbeispiel erfolgte auf einer Bogenoffsetdruckmaschine vom Typ MAN-Roland R 700 bei einer Druckleistung von 8000-12000 Exemplaren/h unter Verwendung eines Feuchtmittels mit 5% Isopropanol. Es wurde mit 1,5-2 g/m² auf Cellulosekarton gedruckt, der zur Herstellung von Primärverpackungen für Lebensmittel geeignet war.

Unmittelbar nach dem Druck wurden die Proben dicht in Aluminiumfolie verpackt und dem Fraunhofer Institut Lebensmitteltechnologie und Verpackung, München, zur Migrationsanalyse nach der dort entwickelten Tenax-Methode übergeben. Mit dieser Methode wird der stoffliche Übergang bei Direktkontakt zwischen bedruckter Kartonseite und Tenax® als Lebensmittelsimulanz (24 Stunden bei 60°C) bestimmt. Tenax® ist ein Adsorptionsmittel, das von der Firma Akzo vertrieben wird. Es handelt sich dabei um ein Polyphenylenoxid auf der Basis von 2,6-Diphenylphenol.

In dem vom Fraunhofer Institut erstellten Gutachten wurde bestätigt, daß das Gesamtmigrat aus der Probe der erfindungsgemäßen Offsetdruckfarbe gemäß Beispiel 1 im Gegensatz zu der Offsetdruckfarbe gemäß dem Vergleichsbeispiel quantitativ nicht über der Menge des unbedruckten Kartons liegt. Die mit der erfindungsgemäßen Offsetdruckfarbe hergestellten Drucke zeigen also im Vergleich zum unbedruckten Karton keine erhöhten Migrationswerte.

Eigene Untersuchungen führten ferner zu folgenden Ergebnissen:
(a) Kartonzuschnitte, die mit der erfindungsgemäßen Offsetdruckfarbe bedruckt waren, verursachten in Kontakt mit 16 µm starker Polypropylenfolie praktisch kein Swelling.
(b) Die sensorischen Tests nach Robinson in Bezug auf Geruch und Geschmack von Drucken mit der erfindungsgemäßen Farbe führten zu einer Bewertung, die deutlich unter 2 lag. Dies bedeutet, daß die Anforderungen, die an geruchsarme Farben gestellt werden, voll erfüllt wurden.

Durch die Offsetdruckfarben vorliegender Erfindung wird der gemäß §31, Abs. 1 des Lebensmittel- und Bedarfsgegenständegesetzes technisch als unvermeidbar angesehene Stoffübergang gegenüber den Farben des Standes der Technik ganz entscheidend reduziert bzw. eliminiert.

### Beispiel 2

Es wurde eine Offsetdruckfarbe gemäß folgender Rezeptur hergestellt:

| | | | |
|---|---|---|---|
| Irgalith Blau GLG® | Ciba Geigy GmbH | Pigment Blue 15:3 | 15 % |
| Ceridust 3620® | | | 1 % |
| Reisstärkepuder Typ B | | | 0,5 % |
| XR-1769 | Lawter International | KP-Harz | 7,6 % |
| Jonrez RP-372® | Westvaco | KP-Harz | 21 % |
| Priolube 1427® | Unichema International | Trimethylolpropan-trioleat | 54,9 % |
| | | | 1̅0̅0̅ |

### Beispiel 3

Es wurde eine Offsetdruckfarbe gemäß folgender Rezeptur hergestellt:

| | | | |
|---|---|---|---|
| Sico Echtgelb D 1361 DD® | BASF AG | Pigment Yellow 13 | 12 % |
| Ceridust 3620® | | | 1 % |
| Reisstärkepuder Typ B | | | 0,5 % |
| Resenol 9080® | D.R.T. | KP-Harz | 14,3 % |
| Tergraf UZ-79® | Resisa | KP-Harz | 11,5 % |
| BOE-HS 201® | BOE-Chemie | Allylester mehrwertiger | 11,3 % |
| | | organischer Säuren | |
| Crodamol PTC® | Croda GmbH | Pentaerythrit-tetracaprat | 47,4 % |
| Co-Mn-Octoat 2/6,5% in | Abshagen % Co | | 2 % |
| Sojaverbindung | KG | | |
| | | | 1̅0̅0̅ |

### Beispiel 4

Es wurde eine Offsetdruckfarbe gemäß folgender Rezeptur hergestellt:

| | | | |
|---|---|---|---|
| Lutetia Rubin BLDN 375® | | | 18 % |
| Ceridust 3620® | | | 1 % |
| Reisstärkepuder | | | 0,5 % |
| Jonrez IM 832® | Arizona Chemical | KP-Harz | 14,1 % |
| Alsynol RL 25N® | Arizona Chemical | KP-Harz | 9,9 % |
| BOE-HS 201® | BOE-Chemie | Allylester mehrwertiger | 9,2 % |
| | | organischer Säuren | |
| Crodamol TMP-CC® | Croda GmbH | Trimethylolpropan- | 45,3 % |
| | | tricapryl/caprat | |
| Co-Mn-Octoat 2/6,5% in | | | 2 % |
| Sojaverbindung | | | |
| | | | 1̅0̅0̅ |

### Beispiel 5

Es wurde eine Offsetdruckfarbe gemäß folgender Rezeptur hergestellt:

| | | | |
|---|---|---|---|
| Elftex 415® | Cabot GmbH | Pigment Black 7 | 18 % |
| Ceridust 3620® | | | 1 % |
| Reisstärkepuder Typ B | | | 0,5 % |
| Tergraf ND-1243® | Resisa | KP-Harz | 13,1 % |
| Ultrarez 8226® | Lawter International | KP-Harz | 10,9 % |
| Crodamol PTIS® | Croda GmbH | Pentaerythrit-tetraisostearat | 56,5 % |
| | | | 1̅0̅0̅ |

Die Verarbeitung der Beispiele 2 bis 5 erfolgte auf einer Bogenoffsetdruckmaschine vom Typ MAN-Roland R 700 bei einer Druckleistung von 8000-12000 Exemplaren/h unter Verwendung eines Feuchtmittels mit 5% Isopropanol. Dabei wurde auf gestrichenen und ungestrichenen Papier- und Kartonqualitäten gedruckt, wobei das Fasermaterial aus Holzschliff, Zellstoff oder Recyclingfasern bestand. Die Offsetdruckfarben wurden im unlackierten Zustand bzw. im lackierten Zustand (Inline mit Dispersionslack) weiterverarbeitet.

In allen Fällen ergab sich, daß die Scheuerfestigkeit, Lackhaftung, Trocknung und Weiterverarbeitung den hohen Anforderungen der Verpackungsmittelhersteller entsprachen. Die erfindungsgemäßen Farben waren also hinsichtlich dieser wesentlichen Eigenschaften den Offsetdruckfarben für Verpackungsdruck des Standes der Technik mindestens gleichwertig. Die Verdruckbarkeit und Druckqualität entsprachen ebenfalls auch auf schnell laufenden Bogenoffsetmaschinen mindestens dem Qualitätsstandard der Farben des Standes der Technik, wobei jedoch durch die erfindungsgemäßen Farben nunmehr die Möglichkeit eröffnet wurde, auf nachwachsende Rohstoffe als Ausgangsstoffe für Offsetdruckfarbenbestandteile zurückzugreifen und zusätzlich sowohl geruchs-, geschmacks- als auch swellingarme Farben bereitzustellen.

Diese positiven überraschenden Eigenschaften der Offsetdruckfarbe liegen in der erfindungsgemäßen Auswahl und Kombination der Harze und Fettsäureester begründet.

## Patentansprüche

1. Offsetdruckfarbe, die ein kolophoniummodfiziertes Phenolharz (A) und/oder ein Maleinatharz (8) und/oder ein modifiziertes Kohlenwasserstoffharz (C) und/oder einen Kolophoniumharzester (D) umfasst, **dadurch gekennzeichnet, dass** sie mineralölfrei ist und als Lösungsmittel für das/die Harze(e) einen oder mehrere wasserunlösliche(n) Fettsäureester (E) Pentaerythrittetracaprat, Dipentaerythrithexacaprat, Pentaerythrittetradocoseat, Dipentaerythrithexadocoseat, Pentaerytrhittetraoleat, Trimethylolpropantrioleat, Trimethylolpropantricaprylcaprat oder Pentaerythrittetraisostearat aufweist, wobei die mehrwertigen Alkohole der Fettsäureester einen hohen sterischen Raumbedarf aufweisen und die Ester sterische Abmessungen des Durchmessers Iₘₐₓ von 2,0 bis 7,0 nm und des Volumens Vₘᵢₜₜₑₗ von 1,0 bis 21,0 nm³ aufweisen.

2. Offsetdruckfarbe nach Anspruch 1, **dadurch gekennzeichnet, dass** sie ferner mehrfunktionelle Allylester mehrwertiger organischer Säuren aufweist.

3. Offsetdruckfarbe nach Anspruch 1 oder 2, **dadurch gekennzeichnet, dass** sie ferner einen Polyallylether aufweist.

4. Offsetdruckfarbe nach einem der vorhergehenden Ansprüche 1 bis 3, **dadurch gekennzeichnet, dass** die Fettsäureester der mehrwertigen Alkohole eine Säurezahl zwischen 5 und 20 mg KOH/g, eine Jodzahl zwischen 0 und 150 g J₂/100g und eine Viskosität im Bereich zwischen 20 und 500 mPa·s aufweisen.

5. Offsetdruckfarbe nach einem der vorhergehenden Ansprüche 1 bis 4, **dadurch gekennzeichnet, dass** die Harze ein Molekulargewicht M_{w} von 5000-120000, eine Säurezahl von 10-40, eine Hydroxylzahl von 20-70 und einem Schmelzbereich von 120-190°C aufweisen.

6. Offsetdruckfarbe nach einem der vorhergehenden Ansprüche 1 bis 5, **dadurch gekennzeichnet, dass** die Offsetdruckfarbe die Harze (A) und (B) sowie den Fettsäureester mehrwertiger Alkohole (E) in einem Mengenverhältnis von 17-36:13-32:45-70 aufweist.

7. Offsetdruckfarbe nach einem der vorhergehenden Ansprüche 1 bis 5, **dadurch gekennzeichnet, dass** die Offsetdruckfarbe die Harze (A), (B), (C) und (D) sowie den Fettsäureester (E) in einem Mengenverhältnis von 0-45:0-32:0-24:0-19:38-70 aufweist.

## Claims

1. Offset printing ink which comprises a colophony-modified phenolic resin (A) and/or a maleic resin (B) and/or a modified hydrocarbon resin (C) and/or a colophony resin ester (D), **characterized in that** it is free of mineral oil and comprises as solvent for the resin(s) one or more water-insoluble fatty acid ester(s) (E)
pentaerythritol tetracaprate, dipentaerythritol hexacaprate, pentaerythritol tetradocoseate, dipentaerythritol hexadocoseate, pentaerythritol tetraoleate, trimethylolpropane trioleate, trimethylolpropane tricapryl caprate or pentaerythritol tetraisostearate,
wherein the multivalent alcohols of the fatty acid esters have a high steric spatial requirement and said esters have steric dimensions of the diameter lₘₐₓ of from 2.0 to 7.0 nm and of the volume Vₘₑₐₙ of from 1.0 to 21.0 nm³.

2. Offset printing ink according to claim 1, **characterized in that** it further comprises multifunctional allyl esters of multivalent organic acids.

3. Offset printing ink according to claim 1 or 2, **characterized in that** it further comprises a polyallyl ether.

4. Offset printing ink according to any of the preceding claims 1 to 3, **characterized in that** said fatty acid esters of said multivalent alcohols have an acid number between 5 and 20 mg KOH/g, a iodine number between 0 and 150 g J₂/100 g and a viscosity in a range between 20 and 500 mPa·s.

5. Offset printing ink according to any of the preceding claims 1 to 4, **characterized in that** said resins have a molecular weight M_{w} of 5000-120000, an acid number of 10-40, a hydroxyl number of 20-70 and a melting range of 120-190°C.

6. Offset printing ink according to any of the preceding claims 1 to 5, **characterized in that** said offset printing ink comprises the resins (A) and (B) as well as said fatty acid ester of multivalent alcohols (E) in a quantitative ratio of 17-36:13-32:45-70.

7. Offset printing ink according to any of the preceding claims 1 to 5, **characterized in that** said offset printing ink comprises said resins (A), (B), (C) and (D) as well as said fatty acid ester (E) in a quantitative ratio of 0-45:0-32: 0-24:0-19:38-70.

## Revendications

1. Encre d'impression offset comprenant une résine de phénol (A) modifiée par de la colophane et / ou une résine maléique (B) et / ou une résine hydrocarbonée modifiée (C) et / ou un ester de résine de colophane (D), **caractérisée en ce qu'**elle est exempte d'huile minérale et présente comme solvant pour la ou les résine(s) un ou plusieurs ester(s) d'acides gras (E) insoluble(s) dans l'eau
tétracaprate de pentaérythrite, hexacaprate de dipentaérythrite, tétra-docoséate de pentaérythrite, hexadocoséate de dipentaérythrite, tétraoléate de pentaérythrite, trioléate de triméthylolpropane, tricapryle caprate de triméthylolpropane ou tétraisostéarate de pentaérythrite,
les alcools polyvalents des esters d'acides gras présentant un encombrement stérique élevé et les esters présentant des dimensions stériques de diamètre lₘₐₓ de 2,0 à 7,0 nm et de volume V_{moyen} de 1,0 à 21,0 ₙₘ³_{.}

2. Encre d'impression offset selon la revendication 1, **caractérisée en ce qu'**elle présente en outre des esters allyliques multifonctionnels d'acides organiques polyvalents.

3. Encre d'impression offset selon la revendication 1 ou 2, **caractérisée en ce qu'**elle présente en outre un éther polyallylique.

4. Encre d'impression offset selon l'une quelconque des revendications 1 à 3 précédentes, **caractérisée en ce que** les esters d'acides gras des alcools polyvalents présentent un indice d'acidité compris entre 5 et 20 mg KOH/g, un indice compris d'iode entre 0 et 150 I₂/100 g et une viscosité située dans la plage comprise entre 20 et 500 mPa · s.

5. Encre d'impression offset selon l'une quelconque des revendications 1 à 4 précédentes, **caractérisée en ce que** les résines présentent un poids moléculaire M_{w} de 5000-120000, un indice d'acidité de 10-40, un indice d'hydroxyle de 20-70 et une plage de fusion de 120-190°C.

6. Encre d'impression offset selon l'une quelconque des revendications 1 à 5 précédentes, **caractérisée en ce que** l'encre d'impression offset présente les résines (A) et (B) ainsi que les esters d'acides gras d'alcools polyvalents (E) dans un rapport de 17-36:13-32:45-70.

7. Encre d'impression offset selon l'une quelconque des revendications 1 à 5 précédentes, **caractérisée en ce que** l'encre d'impression offset présente les résines (A), (B), (C) et (D) ainsi que l'ester d'acides gras (E) dans un rapport de 0-45:0-32:0-24:0-19:38-70.
